Europäisches Patentamt

European Patent Office

Office européen des brevets

(11) Publication number: **0 319 338**
A2

# (12) EUROPEAN PATENT APPLICATION

(21) Application number: **88311480.3**

(51) Int. Cl.4: **B 62 D 55/215**

(22) Date of filing: **02.12.88**

(30) Priority: **02.12.87 GB 8728177**

(43) Date of publication of application:
**07.06.89 Bulletin 89/23**

(84) Designated Contracting States: **DE FR GB**

(71) Applicant: **AVON RUBBER PLC**
**Bath Road**
**Melksham Wiltshire SN12 8AA (GB)**

(72) Inventor: **Turner, Donald Milne**
**Swithuns Gate Ostlings Lane**
**Bathford Bath Avon (GB)**

**Boast, David**
**6 Chapel Path Colerne**
**Chippenham Wiltshire (GB)**

(74) Representative: **Harrison, David Christopher et al**
**MEWBURN ELLIS & CO 2/3 Cursitor Street**
**London EC4A 1BQ (GB)**

(54) **Track for a track vehicle.**

(57) A track for a tracked vehicle is articulated by elongate flexible high-tensile strength connectors (20) enlarged ends of which are received in housings (10,11) in link parts (1). The enlarged ends may be fitted and removed by lateral movement out of the housings.

Fig. 1.

## Description

### TRACK FOR A TRACK VEHICLE

The present invention relates to tracks for tracked vehicles and is intended to provide an improvement over the conventional manner in which these tracks are articulated. The prior art includes tracks of single pin and dual pin type. The single pin type is one wherein a pin passes through successive intermeshing lugs which originate respectively from adjacent links. Bushings between the pin and the lugs take up the rotation and high tensions which occur between the links. For this reason the performance of the track is often limited by the life of the bushings.

In the dual pin type each track link has a housing at each end which extends the whole width of the link. Each housing encloses a pin, again communicating with the housing through bushings. The pins have protruding ends and are joined together by connectors which are clamped around those ends of the pins, thus connecting the links. In this design the life of the bushing is much improved; however the weight of the track as a whole is increased as well as the pitch length. Both of these have a tendency to increase the vibrations generated in the vehicle which bears the track.

The present invention aims to obviate these disadvantages by a radical new approach which is to eliminate axial pivotal couplings from between at least some of the links of a track. This is done by providing flexible connectors of high tensile strength, between links, to transmit strain longitudinally between them. By longitudinally, we mean in the circumferential direction of the track.

The removal of pivot points between links (or between the links and connectors) leads to a substantial reduction in the work which had to be done in those earlier constructions in shearing the bushes which are included within them as the track rotates, which in turn results in a reduction in power consumption and in the heat generated by that rotation.

In the present invention, a track of a tracked vehicle includes rigid track parts which are coupled longitudinally together by longitudinally elongate flexible connectors of high tensile strength. In one embodiment of the invention, components for a track include rigid parts which have housings for the reception and longitudinal retention of a flexible connector, and a flexible connector having end portions adapted to be respectively received in and longitudinally retained by housings in ends of the respective rigid parts.

Each housing may include a laterally disposed channel opening outwardly to the ends of the part and having respective bases which are larger than a portion of the channel longitudinally outward of that base, whereby an enlarged end of a flexible connector may be entrapped in the enlarged base of the channel against longitudinal withdrawal from the channel. The wall to the channel may diverge arcuately outwardly towards the end of the part so as to provide an appropriate arcuate support surface for the link as it flexes when the track for example passes over end rollers of the track-runs in a vehicle or over rough ground.

In one embodiment, the rigid parts are rigid track links which are conventional but for their adaptation to the flexible connectors; in another embodiment the rigid parts are intermediate parts other than track links, running surfaces of the track being provided by rubber blocks sandwiching the flexible connectors. Furthermore, in the latter embodiment, a composite track unit may be made up with rigid links at each end and a plurality of flexible connection lengths between them; and the rigid links may be conventionally pivoted to adjacent such links.

It is a particular advantage of the invention that the flexible connectors need not be a particularly fast fit within the channels and can be laterally restrained in those channels by stops at the ends of the channels (one of which might be permanent and the other removable, or both be removable) so that in the event of need for replacement either of a link or of a connector there should be considerably less time and effort involved than is involved in the replacement of the highly pre-stressed bushes of the prior art constructions.

One manner of achieving this is the simple lateral removal of the flexible connector from the rigid part; in another embodiment the rigid part may be one which is in two or more parts which are clamped together to define the housing receiving the connector, and where the rigid part is an intermediate part where connectors going in both longitudinal directions may be held together by a single shaft passed through apertures in the end of each connector.

Because unlike the prior art constructions the connector per se will provide little or no lateral coupling between the links, this must be otherwise provided and a preferred form of coupling will be interfingering teeth on the links.

The connectors may be formed by winding a high strength cord over a cylindrical sheet of rubber on a core followed by one or more other layers of rubber, removing the core and collapsing the tube after having inserted into the tube shaped bead rods at diametrically opposite parts thereof. The collapsed tube is now cured under pressure around the bead rods so as to form a flat connector with beaded ends and of very high tensile strength.

That leads to a connector having an outwardly diverging end, which may under the extremely great loads experienced have a tendency to splay apart the rigid part in which it is received. An alternative method of forming the flexible link is to wind the cord around, or collapse the previously mentioned tube around, a hollow bobbin-like element offering a central aperture for the free reception of a coupling shaft. Another way of forming a flexible link for anchorage in a channel having a comparatively narrow mouth and wide base is to reeve a high tensile reinforcement around two bead cores at each end of the link, first around one core from between the cores, across in front of the cores, round the other core and then between them. This gives a flat-fronted conformation which is of general applicability not only in tank tracks. Furthermore to increase load distribution within the connector and prevent crushing of the reinforcements the connector, at its bead portion, can be impregnated with a resin which is then cured.

Utilisation of the principles of the present invention enables another problem in track design to be tackled. When a link of a track first makes contact with the road or other running surface it will do so as it is coming round the leading road wheel of the track vehicle. It therefore makes contact with its "heel" at a time when it is at an angle to the track parts which have already been laid down. As it straightens to become parallel with the ground it is found, surprisingly, that the tendency is for the links which have already been laid down to tend to be dragged forwards towards the latest one rather than for that latter to be dragged back towards the previously laid down links. This effect is believed to be a cause of additional abrasion in the surface track pads or of cracking in the rubber surface.

If the distance between the track pad surface and the pivot point of the link can be reduced, then also this "walking" effect will be diminished.

In the present invention, the distance can be diminished to a much smaller value than that which has been possible with aperture housing and bushing constructions, a limiting factor of which is the need for the housing to be of a certain minimum diameter in order to be able to withstand the stresses which it encounters.

In the present type of design the vertical distance between the "hinge" and the surface of the track pad can be substantially reduced, for example to 30mm.

Thus in its preferred aspects the invention can provide an assembly in which the special connection means employed allow use of a light, flexible connector where previously a heavy, rigid connector was needed, while strong rigid material is employed where it is actually necessary. Use of such flexibly-connected tracks is therefore envisaged for vehicles even of large size e.g. 25 to 30 tons, where previously flexible "conveyor-belt" type tracks was restricted to small vehicles because of their inability to work with large drive etc. stresses.

Particular embodiments of the present invention will now be described with reference to the accompanying drawings wherein

Figure 1 is a side view,

Figure 2 is a plan view of one link and connector with portions of an adjacent link and connector,

Figure 3 is a plan view of a second embodiment,

Figure 4 is a side view of the second embodiment,

Figure 5 shows stages in making a flexible connector,

Figure 6 is a perspective view of flexible connectors in a third embodiment,

Figure 7 is a plan view of Figure 6,

Figures 8 and 9 are sectional side elevations of an assembly of this third embodiment.

In the first embodiment, the body 1 of each link has a cast steel frame (a rigid polymeric material could be used) having at each end fork parts 2,3 defining channels 4,5 which extend the whole lateral width of the link. The channels open mutually outwardly towards the ends of the link, from a constricted throat 6,7, with surfaces 8,9 of a comparatively high radius of curvature. Between the constriction and the middle of length of the link there is a much enlarged base 10,11 of the channel which again is of a rounded profile.

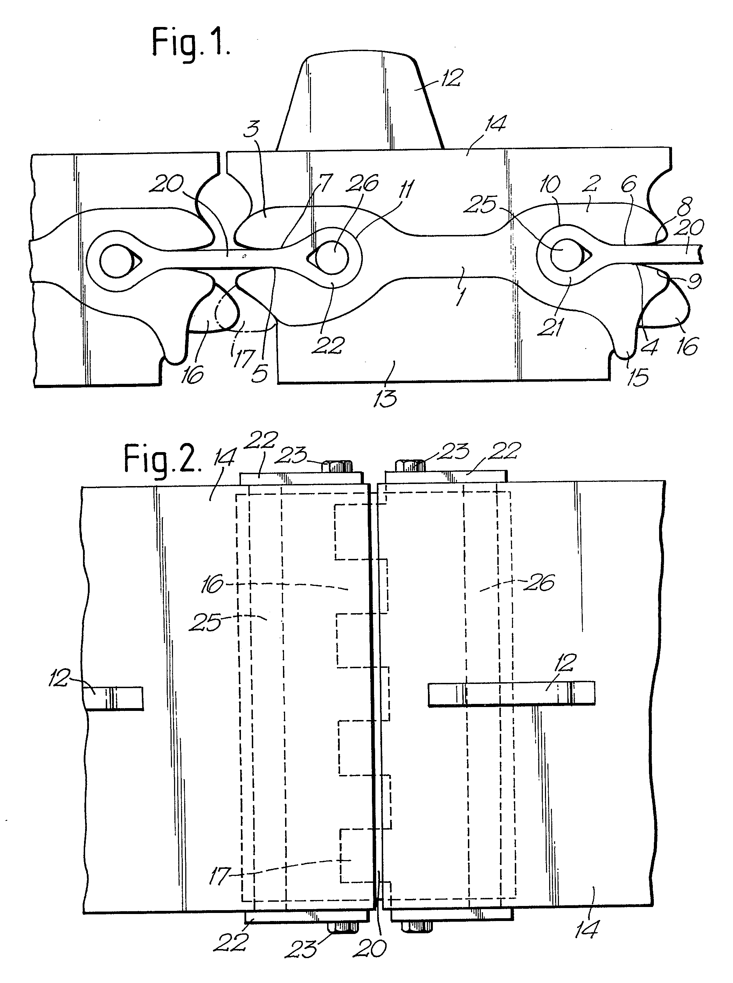

Each link has a conventional horn 12 for lateral guidance on the running gear of the vehicle, a road engaging pad 13 of rubber and a running pad 14 on which the running wheels of the vehicle will engage. A bar 15 is for emergency ground contact if the pad 13 should be abraded or lost, and fingers 16,17 project alternately outwardly from the respective ends of the link so that they interfinger as is best seen in Figure 2 and provide relative lateral restraint of the links. To hold the links together longitudinally (i.e. in the direction of run, or circumferential direction, of the track) there are provided elongate high tensile strength connectors 20. These extend the full width of the links and have at each end enlarged beads 21 which are of a dimension to fit easily within the enlarged bases 10,11 of the channels. The length of the links is such as to hold the tracks in the appropriate axial relationship with the pads 14 forming a substantially continuous surface and the fingers 16,17 intermeshing.

The connectors 20 are fitted by being slid sideways into the channels. It is for this reason that the beads 21,22 are made an easy fit within the enlargements 10,11. To restrain them from falling out laterally, there may at one end of each channel be a permanently formed tongue and at the other end a removable cap or there may be a removable cap at both ends. As seen in Figure 2, a removable cap 22 is seen at each end, bolted at 23 to the link.

To form connectors 20, any suitable method may be used but we find that it is particularly easy to make a reinforced tube of uncured or semi-cured rubber or rubber-like material by laying a first layer of rubber on a cylindrical core, winding it with cords, covering it with a further layer or layers of rubber material, removing the core and collapsing the sleeve so that its internal surfaces contact. Then, bead-forming rods 25,26 are inserted inside the tube at diametrically opposite parts. These bead forming rods are appropriately shaped to the task envisaged. The whole is then cured in a mould to form the dumb bell or dog bone section seen in the drawings. Of course the connectors may be moulded in substantial axial lengths which are more than the width of a single connector. The cords may be of any suitably high-tensile nature. Examples are aramid cords such as Kevlar (Registered Trade Mark), and steel.

It can be seen that the use of flexible connectors such as 20 obviates any single centre of relative pivotal rotation between the links as they pass round during the travel of the track. By appropriate choice of the curvature of the surfaces 8 and 9 in the channels, bearing in mind the minimum radii of curvature encountered by the track as a whole as it rotates, all excessive stresses on the track on the connectors can be obviated. In this embodiment the radius of these surfaces is 30mm.

It is also found that to give an adequate tensile strength the diameter of the bead rod should be in the region of a minimum of 6 to 10mm.

The design shown has much lower rolling resistance than conventional bushed and pivoted tracks, enables a reduction of the height between the "hinge point" and the road contacting surfaces and has lower weight than conventional tracks.

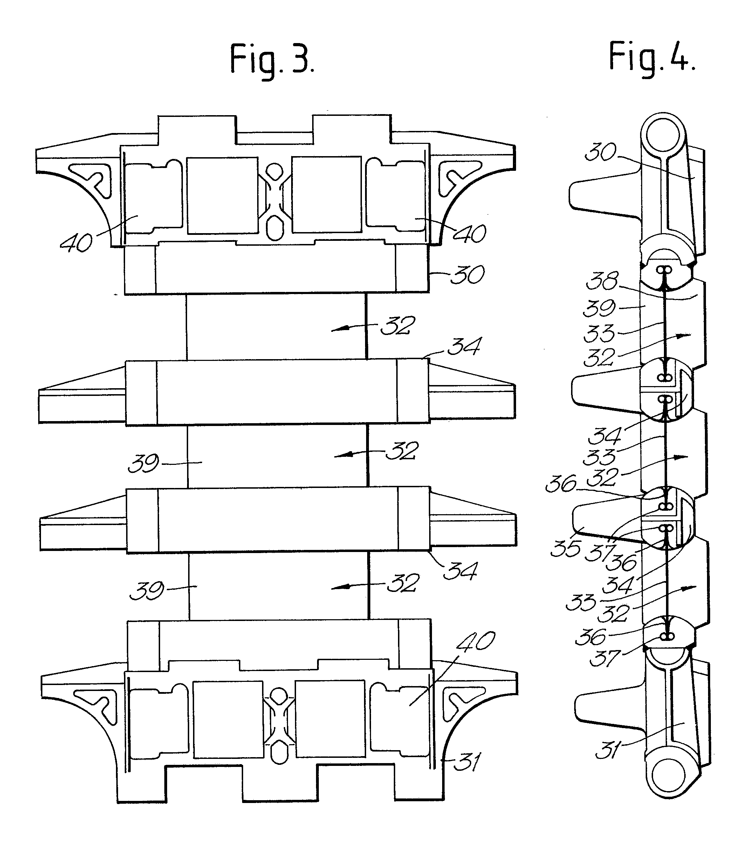

A second embodiment is seen in Figures 3 and 4. This is a composite unit, having rigid end links 30,31 joined by a plurality of links 32 which are built on flexible connectors 33. Each of these high-tensile flexible connectors 33 extends between two rigid parts, either a link 30 or 31 and an intermediate part 34, or two parts 34.

Each part 34 has a horn 35, and two essentially T-section channels 36. As in the previous embodiment, the mouth of the channel is the stem of the T and diverges in a curved profile towards its outer end. Similarly to the channels described in the previous embodiment the base of the channels, i.e. the head of the T, entraps the enlarged beads 37 of the flexible connectors. Running blocks 38,39 for the road and the running wheels are secured to each face of the connectors 33 to sandwich them. Drive is communicated onto the end links 30,31 at conventional sprocket holes 40.

The ends of the blocks 38,39 conform to and are very slightly spaced from the cylindrical outer surface of the parts 34 so that there may be relative rotation between them.

The conformation of the flexible connectors is designed to be one which does not have so great a tendency to force apart the channel as the divergent wedges of the first embodiment. In a method of general applicability a connector having an enlarged head offering a substantially planar front face, i.e. load transferring face, may be built up on two rigid bead cores 41,42,43,44 at each end by reeving the reinforcement in a double clover-leaf pattern; that is to say starting (say) by entering between cores 41 and 42 going anticlockwise round core 41, crossing over to in front of core 42, round core 42 clockwise to emerge between the cores and then to the other end, entering between cores 43 and 44, clockwise round 43, in front of 43 and 44, clockwise round 44, emerging between 43 and 44 to go to the other end, and so on. This gives planar front faces 45. The composite is then cured and moulded as before.

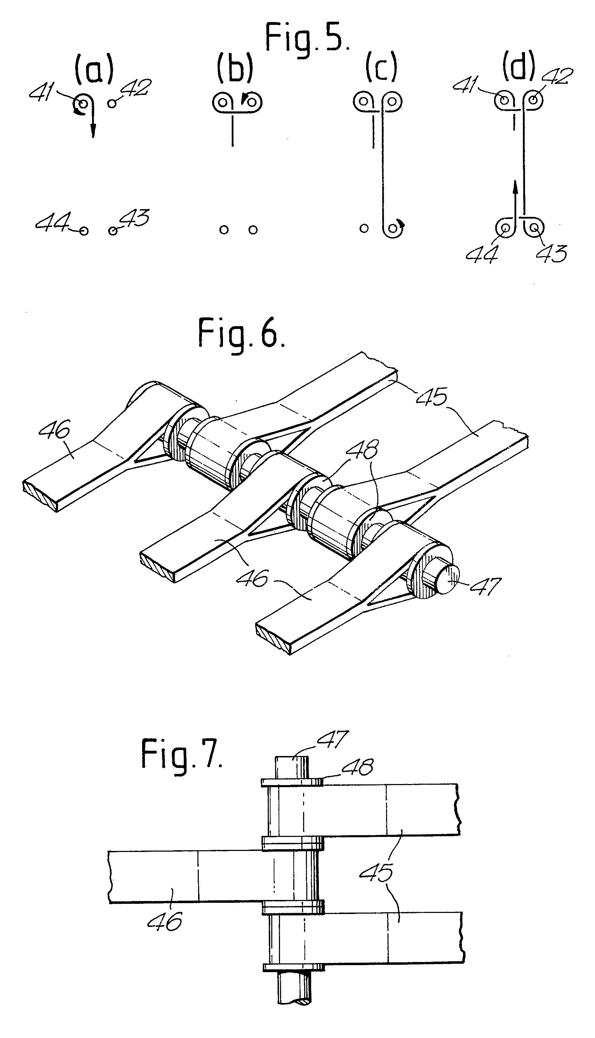

In a third embodiment, seen in Figures 6-9 there is a modification of the connector construction and of the intermediate parts of the second embodiment.

Connectors 45 extend in one longitudinal direction and connectors 46 extend oppositely from a common shaft 47.

The connectors are formed by winding the high tensile core around bobbins 48, to surround a hollow core of the bobbins and lie between their end flanges. The method of construction may be as previously described. This yields connectors which may very simply be united by passing a comparatively freely-fitting shaft 47 in common through the hollow cores of the bobbins. The total number of connectors 45,46 thus joined, across the width of the track, may be odd or even.

An intermediate part 50 has upper and lower parts 51,52. On the upper part 51 is a horn 53 which is (longitudinally) longer than a conventional one, so as to offer increased resistance to lateral displacement and a degree of angular guidance against twisting of the part 50.

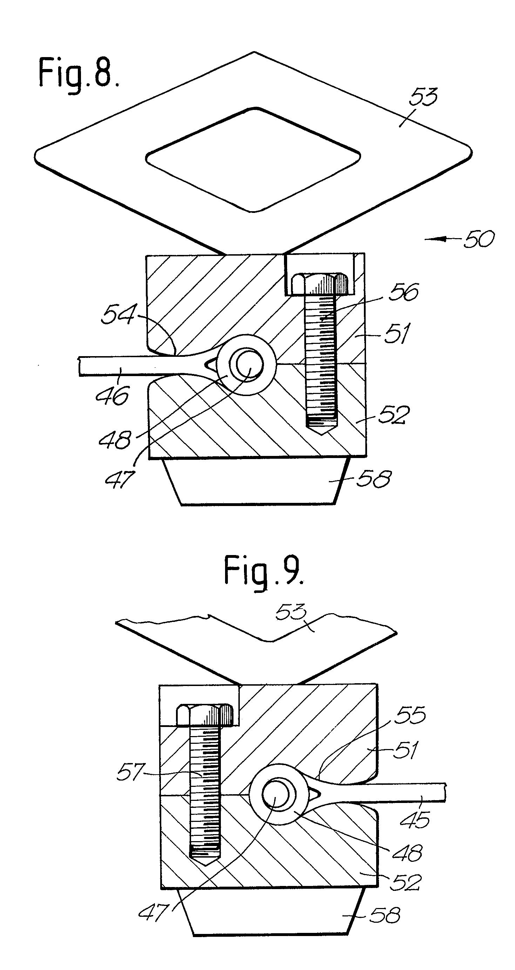

The parts 51,52 define between them housings 54,55 staggered laterally of the track as shown in Figures 8 and 9 which house respectively end parts and bobbins of connectors 45,46. Bolts 56,57 secure the parts 51,52 together and entrap the end parts. However, most if not all of the tractive force between connectors is communicated through shear of the shaft 47 and the parts 51,52 may be of comparatively unmassive construction and might even be made of e.g. filled plastics material.

A tread pad 58 may be borne on the lower part 52.

The parts 51 or 52 may have external horns or shoes at their lateral ends further to take up misalignment.

Both in this and the previous embodiments the flexible connectors may include transverse reinforcement also, to prevent lateral spread.

The the bead portion (only) may be resin-impregnated and cured; this substantially rigid encapsulation supports the reinforcement, spreads load amongst it and prevents crushing.

## Claims

1. A track for a tracked vehicle having rigid track parts (1;30,31,34;50) connected longitudinally together by elongate flexible connectors (20;33;45;46) of high tensile strength.

2. A track according to claim 1 wherein the connectors (20,33,45,46) have an enlarged end portion (21,22;37;48) received in a housing (10,11;36;54,55) in the rigid part, said housing having a base communicating to the outside of the part by a channel of lesser dimension than the enlarged end portion (21,22;37;48).

3. A track according to claim 1 wherein the channel is defined by walls which diverge arcuately towards the outside of the part.

4. A track according to any one of the preceding claims wherein longitudinal strain is communicated to the part from the connector (20,33) by longitudinal engagement of the enlarged end part (21,22;37) with the housing.

5. A track according to claim 4 wherein the enlarged end part (37) has a face which is substantially perpendicular to the direction of elongation of the connector and is for abutment with a wall of the housing (36) to communicate force between them.

6. A track according to any one of the preceding claims wherein connectors (45,46) extend in both longitudinal directions from the rigid part (50) and are connected together within the part by means (47) passing between the connectors (45,46).

7. A track according to claim 6 wherein the means (49) is a straight shaft passing alternately through end portions of the connectors (45,46).

8. A track according to any one of the preceding claims wherein at least one of the rigid parts (34,50) is an intermediate part, longitudinally between two other of the rigid parts which are track link parts (30,31).

9. A track according to any one of the preceding claims wherein the end parts of the connectors include at least one bead element (25,26;41,42,43,44;48) around which cord of high tensile material passes.

10. A track according to claim 9 wherein the bead element is a hollow bobbin (48).

11. A method of assembling or disassembling a track of a tracked vehicle including rigid parts joined by flexible elongate connectors comprising executing a lateral movement between at least the rigid part and the connector whereby to slide an enlarged end of the connector laterally into or from a housing extending across the rigid part.

12. A method of assembling or disassembling a track of a tracked vehicle including rigid parts joined by flexible elongate connectors comprising executing a lateral movement between at least one joining element and connectors extending in opposite longitudinal directions to cause the joining element to interlink laterally between the connectors or to withdraw from such interlinking.

## Fig.1.

## Fig.2.

# Fig. 3.

# Fig. 4.

# Fig. 5.

(a)  (b)  (c)  (d)

# Fig. 6.

# Fig. 7.

Fig.8.

Fig.9.